# EUROPEAN PATENT APPLICATION

(11) **EP 0 933 259 A1**
(43) Date of publication of application: **04.08.1999**
(21) Application number: 99101914.2
(22) Date of filing: 29.01.1999
(51) Int. Cl.: B60R 9/058

(54) **Load carrier device for vehicles**

(30) Priority: 30.01.1998 IT TO980018
(71) Applicant: MADIGE S.R.L., I-12040 Salmour (Cuneo) (IT)
(72) Inventor: Germano. Cian Piero, 10025 Pino Torinese (TO) (IT)
(74) Representative: Robba, Pierpaolo

(57) **Abstract**

The present invention refers to a load carrier device for vehicles provided with a supporting bar (2) in which are provided means for fixing the device to the roof of the vehicle comprising a metallic band (3) provided with a fixing hook (5), said band being collectable into said bar (2) or releasable operating on a knob which drives a worm screw (6) that causes a cursor (8) to slide into said bar (2) and wherein can be provided means (10,11,12) for engaging or disengaging said band (3) relative to the cursor (8).

## Description

The present invention refers to a load carrier device which can be placed and removed without using spanners or other auxiliary tools.

At present the load carrier devices for vehicles are made of a couple of metal bars placed transversally on the roof of the vehicle and fixed thereto by means of suitable supports provided with clamping jaws.

Said supports are generally fixed to the roof of the vehicle, which can be provided with a small gutter or other fixing means, by means of suitable jaws clamped by screws, bolts or other engaging means.

In the well known load carrier devices, the clamping screws or bolts are generally operated by a proper spanner or screwdriver, or by knobs integral to the head of the screw or bolt.

A drawback originating from the use of auxiliary means as a spanner or a screwdriver consists in that, although they permit to operate with a good lever arm, allowing therefore a solid clamping of the jaws with a minimal effort, nevertheless they are often mislaid as they are removed from the load carrier device when it has been placed or removed from the roof of the vehicle.

In order to obviate this drawback have been proposed load carrier devices having control knobs for the screws or the bolts closing the jaws.

However, these knobs, as they must have limited dimensions for esthetical reasons and for not interfering with loading and unloading operations of objects on the carrier device, do not provide an appropriate lever arm and often require a great effort to be operated.

Moreover they are subject to breakage due to collisions with objects during their loading and unloading.

As an attempt to solve this problem are generally proposed load carrier devices provided with screws or bolts having a thread with reduced pitch in order to obtain a reduction effect and to allow a reduction in the effort needed in the fastening operations.

With this solution it is however necessary to operate longer on the driving knob of the screw or bolt making uncomfortable the mounting operation of the load carrier device.

A further drawback of the well known load carrier devices consists in that the length of the bars must be adapted to the width of the roof of the vehicle before placing them on the vehicle.

In order to obtain a length adjustment of the bars the well known systems generally provide telescopic elements that can be locked one to each other by means of screws or bolts.

Again with reference to screws or bolts used for adjusting the length of the bars, the known systems however present the drawback of requiring the use of spanners or other means that could be easily mislaid.

The Italian Utility Model N.205322 describes a fast fixing device for a load carrier device for a car in which it is possible to regulate rapidly the distance between the supports and, consequently, the width of the load carrier device operating on a bar locking cam in the supports.

The device described in the above mentioned Utility Model however does not allow to adjust the length of the bars and it is therefore useless on vehicles whose roof is narrower than the length of the bars in that said bars would project dangerously on the two sides of the roof.

It is an object of the present invention to provide a load carrier device for vehicles that can be used without the aid of spanners or other tools.

A further object of the present invention is to provide a load carrier device for vehicles that can be operated easily and rapidly and that can be adapted to a large number of vehicles.

These objects of the present invention are reached by a load carrier device as claimed in the enclosed claims.

The invention will now be described in detail with particular reference to the drawings attached as a non limiting example in which:
Figure 1 is a partial sectional perspective view of the device;
Figure 2 is a view of a particular of the device shown in Figure 1; and
Figure 3 is a partial sectional perspective view of a second embodiment of the device.

With reference to the accompanying drawings the device object of the present invention comprises a support 1 having a substantially trapezoidal shape, to which is coupled by known means a bar 2 that constitutes the load bearing element of the carrier device and that can be used for fixing accessories for carrying skis, bicycles and so on.

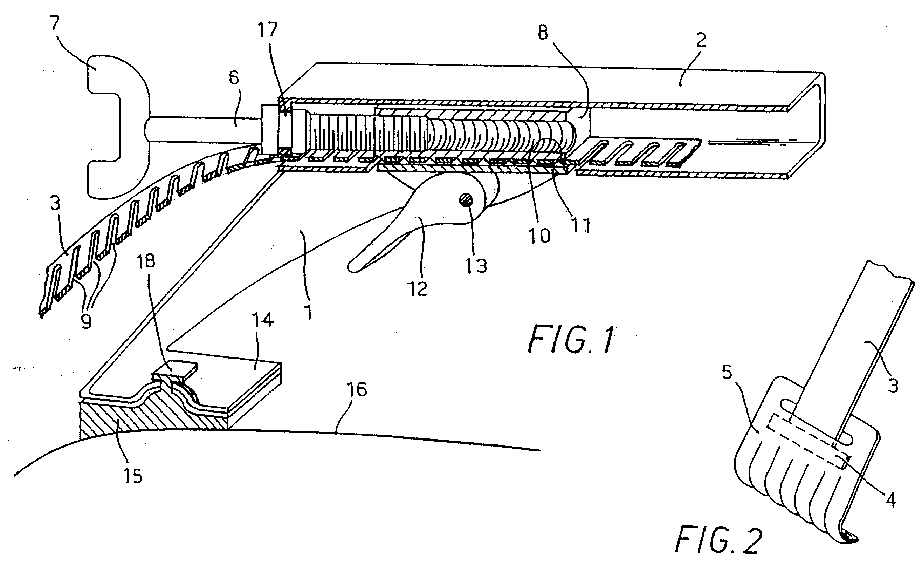

In Figure 1 it is shown a portion of the load carrier device, however, the load carrier device comprises for each bar 2 a couple of supports 1 placed at the opposite ends of the bar 2 for securing it to the roof of the vehicle.

The device object of the present invention moreover comprises a band 3, preferably made of metal, provided, in correspondence of a free end, with a "T" terminal 4 suitable to be inserted into a corresponding hole provided in a hook 5 shaped as to adapt itself to the fixing means provided by the manufacturer of the vehicle for load carrier devices.

Said hook 5 is one of a plurality of variously shaped hooks that can be provided together with the load carrier device and that allow the connection of the device with different vehicles.

The opposite end of the band 3 is inserted into the bar 2 and, by means of a mechanism that will be described below, can be collected into the bar 2 or released varying thus the length of the portion of the band 3 that remains out of the bar 2.

The mechanism for varying the length of the portion of the band 3 internal to the bar 2 provides substantially a worm screw 6, a driving knob 7 for said screw 6 and a cursor 8 internally threaded than can be made slide into the bar 2 operating on the worm screw 6 by means of the knob 7.

The screw 6 is housed partially into the bar 2 and is provided with a groove 17 in which it is engaged a locking clip, not shown, that allow the screw 6 to rotate without leaving its seat.

Moreover, the band 3 is provided with a plurality of notches 9 in which are inserted engaging teeth 10 present in the lower part of the sliding cursor 8.

Said mechanism moreover comprises a slide 11 that can be pushed upwardly, towards the cursor 8, by means of a cam lever 12.

The cam lever 12 can be rotated around a pivot 13 passing through the lateral walls of the support 1.

The slide 11 has a couple of slots, not shown, for the passage of the pivot 13, that allow the movement of the slide 11 between a releasing position and an engaging position.

Thanks to the slide 11 it is therefore possible, operating on the cam 12, to free or engage the band 3 relative to the teeth 10.

In this way the adjustment of the band 3 can advantageously be obtained firstly coarsely, leaving the band 3 sliding between the teeth 10 and the slide 11 when the cam lever 12 is released and, subsequently, finely moving the cursor 8 and, consequently, the band 3 into the bar 2 operating on the knob 7 when the cam lever 12 is locked.

The support 1 is provided, in correspondence of its lower base 14, with a hole for the passage of the protuberance 18 of a block 15 made of rubber or other soft material, so shaped to adapt itself to the profile of the roof 16 of the vehicle.

The device according to the invention can moreover comprise a closing cover, not shown, for protecting the driving knob 7 of the worm screw 6, eventually provided with an antitheft system that prevents releasing of cam 12 and band 3.

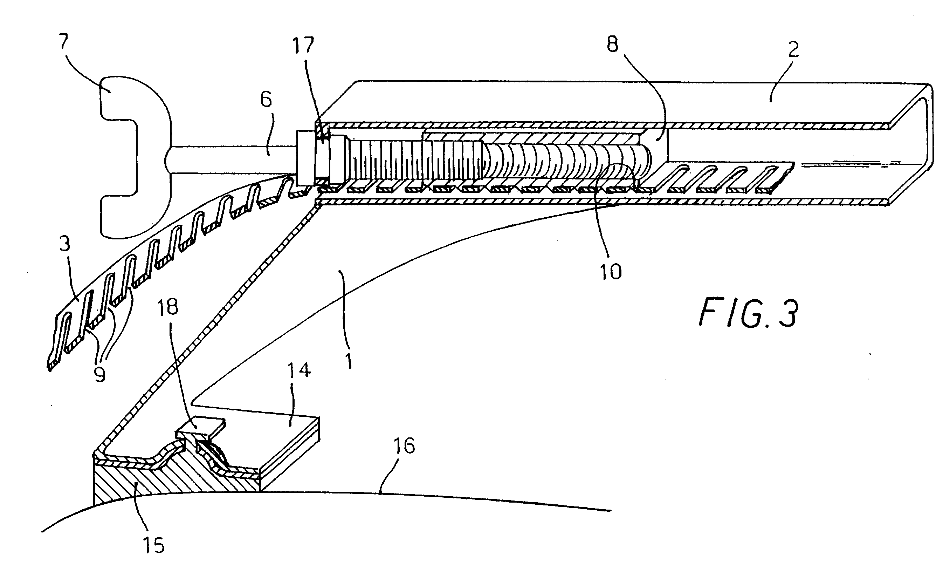

With reference to Figure 3 it is shown a different embodiment of the present invention according to a simplified embodiment wherein the band 3 is permanently engaged by the cursor 8 into the bar 2 and wherein it is therefore provided only the fine adjustment of the portion of the band 3 that gets out from the bar 2.

Advantageously, even according to this embodiment, thanks to the provision of the band 3 the length of the load carrier device can be varied at will allowing the use of fixed-length bars on a large number of vehicles.

## Claims

1. Load carrier device for vehicles comprising;
- a bar (2) forming a load bearing element to which can be fixed accessories for transporting objects;
- a couple of supports (1) to which it is fixed said bar (2), said supports being provided with means for fixing the device to the roof of the vehicle;
characterised in that at least one of said fixing means comprises:
- a cursor (8) internally threaded and sliding into the bar (2);
- a worm screw (6) operable by means of a knob (7), said screw being suitable for providing, when rotated, the sliding of said cursor into said bar;
- a band (3) having in correspondence of one of its extremities a hook (5) so shaped as to adapt itself to housings provided by the manufacturer on the roof of the vehicle and having the opposite end housed into said bar (2), said band (3) being provided with means (9) for engaging with said cursor (8), so that when said cursor (8) is moved inwards said bar, said band (3) is consequently dragged into said bar (2) and when said cursor (8) is moved outwards said bar, said band (3) is consequently released outside said bar (2).

2. Device according to claim 1, moreover comprising a slide (11) placed in correspondence with said cursor (8) and movable operating on a cam lever (12) between a releasing position and an engaging position corresponding, respectively, to the configuration in which said band (3) if free to slide relative to said cursor (8) and to the configuration in which said band (3) is engaged with said cursor (8).

3. Device according to claim 1 or 2, wherein said cursor (8) is provided with a plurality of teeth (10) suitable for engaging with corresponding engaging means made of notches (9) provided in said band (3).

4. Device according to claim 1 or 2, wherein said band (3) has, in correspondence of a free end, a "T" shaped terminal (4) in which it is inserted a hook (5) so shaped as to adapt itself to the fixing means of the load carrier device provided by the manufacturer of the vehicle.

5. Device according to any of the preceding claims, wherein said supports (1) are provided with, in correspondence with the lower base (14), a hole for the passage of a protuberance (18) of a block (15) made of rubber or other soft material, shaped as to adapt itself to the profile of the roof.

6. Device according to any of the preceding claims, wherein said band (3) is made of metal.
